# EUROPEAN PATENT APPLICATION

(11) **EP 1 270 385 A1**
(43) Date of publication of application: **02.01.2003**
(21) Application number: 02010822.1
(22) Date of filing: 15.05.2002
(51) Int. Cl.: B62D 65/00

(54) **Mock-up of a motor vehicle structure (cubing)**

(30) Priority: 27.06.2001 IT TO20010109 U
(71) Applicant: STOLA S.p.A., 10090 Cascine Vica - Rivoli (Torino) (IT)
(72) Inventor: Stola, Roberto, c/o STOLA SPA, 10090 Cascine Vica, Rivoli (Torino) (IT); Stola, Alfredo, c/o STOLA SPA, 10090 Cascine Vica, Rivoli (Torino) (IT)
(74) Representative: Notaro, Giancarlo

(57) **Abstract**

A description of a mock-up of motor vehicle structure or cubing which rigorously reproduces the conformation and design dimensions of an entire motor vehicle body, both as regards its external surfaces and as regards the internal surfaces of the passenger compartment.

## Description

The present finding relates to a mock-up of a motor vehicle structure of the type named "cubing" or "assemblability master" for the motor vehicle industry, rigorously reproducing the conformation and design dimensions of a motor vehicle structure, with all its surfaces of reference and for fixing one or more parts destined to be assembled on it, said cubing being utilizable to check the production quality of the aforesaid parts by assembling said parts on the cubing and checking the precision of the relative connections.

The use of "cubings" has become increasingly widespread in the motor vehicle industry in recent years. As specified above, the cubing is an exact duplicate of a motor vehicle structure. According to prior art, for example it copies an external part of the motor vehicle body, or a part inside the passenger compartment, such as the instrument panel. It is produced for example in aluminium, on the basis of the mathematics of the CAD model on a 1:1 scale and is therefore an exact duplicate of the design. The cubing is used to check the precision of the connections of production parts with the real model, to guarantee that the elements correspond exactly to the design.

According to prior art, as specified above, cubings of external parts of the motor vehicle have already been used in order to evaluate the precision of the connections of the various parts destined to be assembled on the outside of the body, such as external finishes, bumpers and similar.

The quality of the components is examined by replacing the models of the cubing with mass-produced elements, thus making it possible to visually check the quality of the connection and the clearances.

Moreover, cubings of internal parts of the passenger compartment of the motor vehicle have already been produced, duplicating an inner part of the body with all the fixing points. In this case also, the cubing is generally produced in aluminium. It allows all internal finishes to be checked, such as the entire instrument panel, the upright coverings, the steering column, the floor coverings, the wiring, the seat belts, etc.. Imperfections detected during these checks allow immediate identification of the element to be modified to ensure the high quality connections required for the mass production of vehicles.

Typically, cubings are produced from the solid by chip-forming machining, using numerically controlled milling machines, and/or using castings, which guarantee duplication of the design dimensions with extremely limited tolerances.

In order to further facilitate operations employing cubing during mass production, and to reduce the costs to produce the cubing, the object of the finding is a cubing with the basic characteristics indicated at the beginning of the present description and characterized in that it is a true duplicate of an entire motor vehicle body, both as regards the external surfaces and as regards the internal surfaces of the passenger compartment.

The production of a cubing utilizable both for the inside and for the outside of the body, makes it possible to simultaneously check on the same cubing the quality of the connections with the finishes both inside and outside the body. Moreover, a reduction in overall dimensions and a reduction in the manufacturing costs of the cubing are obtained.

According to another characteristic of the finding, the cubing has a structure composed of a plurality of modules coupled to one another and fixed in a precise manner by means of removable connection means, such as screws. Preferably, the modules forming the cubing comprise at least one platform, two sides, a front module, a rear module and some modules for the roof.

A further characteristic of the finding lies in the fact that the cubing includes a base framework supporting the platform, and at least one auxiliary frame supporting an exact duplicate of the structures of the side doors, assembled slidingly at the bottom in the base framework in a transverse direction in relation to the longitudinal direction of the body, between a position in which the door is at a distance from the body, and a position in which the door is connected in its corresponding compartment of the body.

Thanks to this characteristic, the cubing according to the finding may be used simply and easily to check the quality of the connections with the internal and external finishes of the door, also providing easy access to the inside of the passenger compartment to check the quality of the connections with the parts destined to be assembled inside, such as on the instrument panel, inside the uprights of the sides, etc..

Further characteristics and advantages of the invention shall become apparent from the description below with reference to the accompanying drawings, provided purely as a non-limiting example, in which:
- Figure 1 is a schematic perspective view of an embodiment of the cubing according to the finding,
- Figure 2 is an exploded perspective view of the cubing in figure 1,
- Figure 3 is a scrap perspective view showing the auxiliary frame supporting the side door which is a part of the cubing, and
Figures 4, 5 are a perspective view of the auxiliary frame in the folded condition and a view in a transverse plane showing the two operating positions of the auxiliary frame.

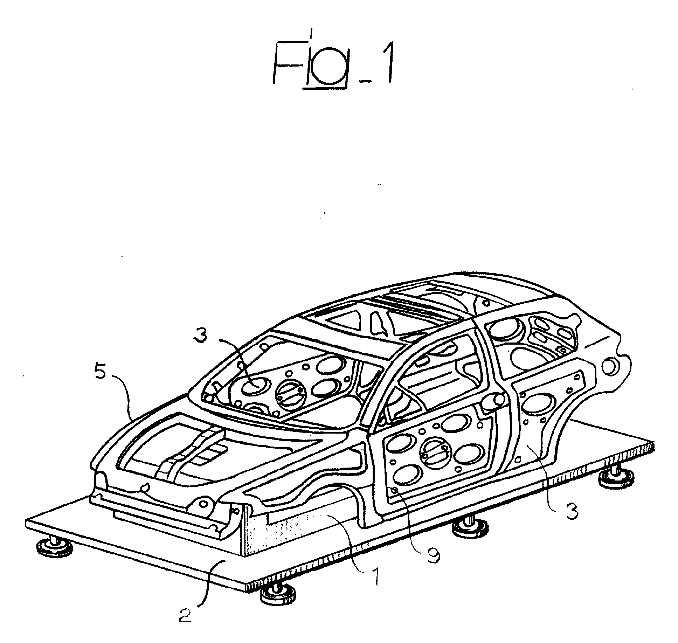

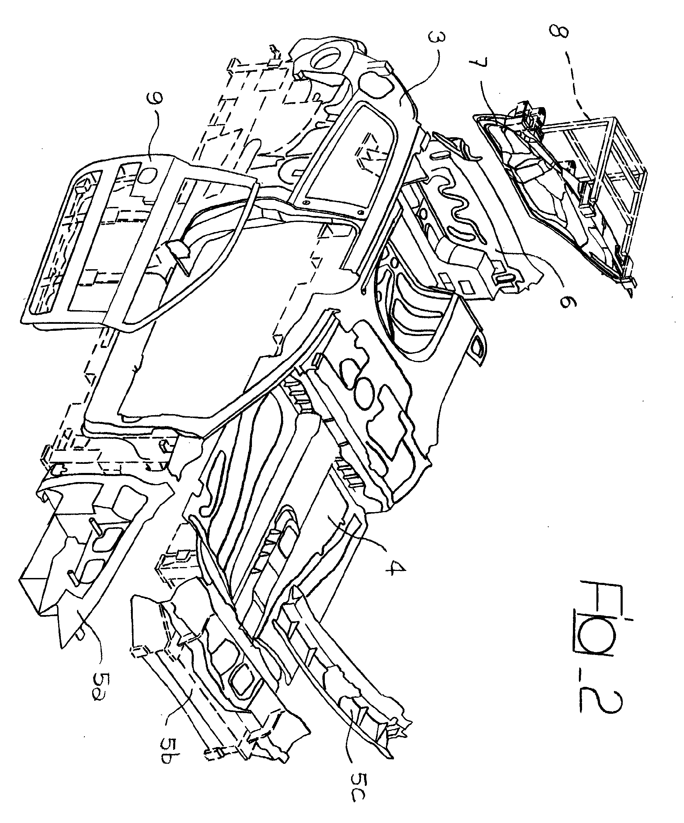

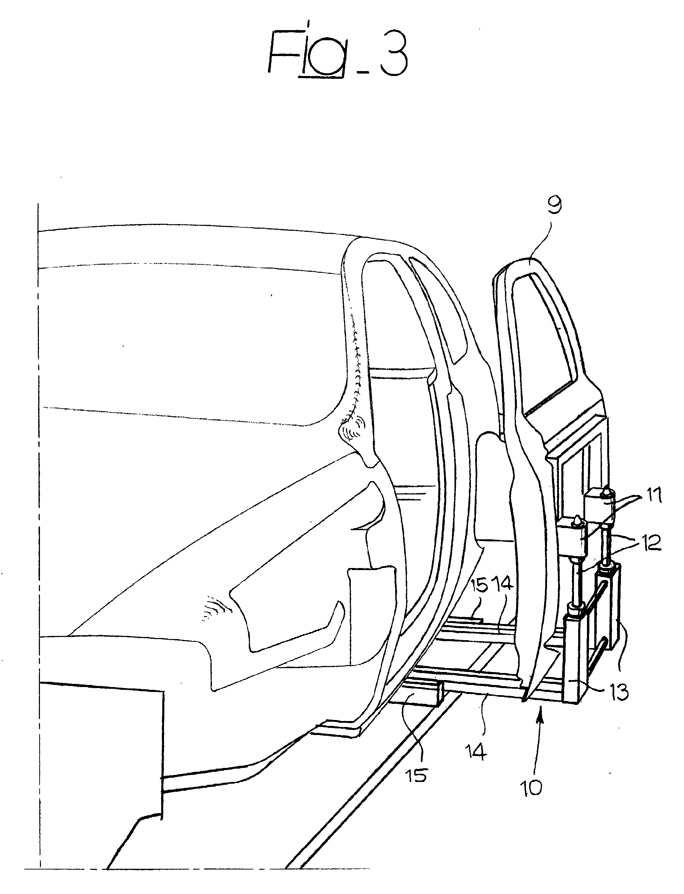

With reference to the drawings, the cubing has a base structure 1 resting on a surface 2, fixed to which are the various modules forming the cubing, connected to one another precisely by means of removable precision couplings, such as by screwing. In the example shown the cubing has two sides 3 (see figures 1, 2) a platform 4, a front module 5, composed of elements 5a, 5b, 5c connected to one another, a rear module 6, and also a rear door 7 supported by an auxiliary frame 8. Side doors 9 are also provided, each supported by an auxiliary frame 10 (figures 3-5).

Each of the aforesaid parts is a structure, for example produced in light alloy, such as aluminium or magnesium alloy, which is constructed observing the dimensions of the drawings or CAD design data with extremely limited tolerances. The elements may be manufactured both by chip-forming machining of the solid or by castings, using numerically controlled milling machines. Each of the aforesaid elements has one surface which identically duplicates the conformation of the real parts of the motor vehicle, with all the surfaces of reference and fixing points for the various elements destined to be assembled outside and inside the body.

The manufacturer of the motor vehicle therefore has a single cubing which may be utilized to check the quality of production components, by assembling these components directly on it to evaluate the quality of the connections and the clearances.

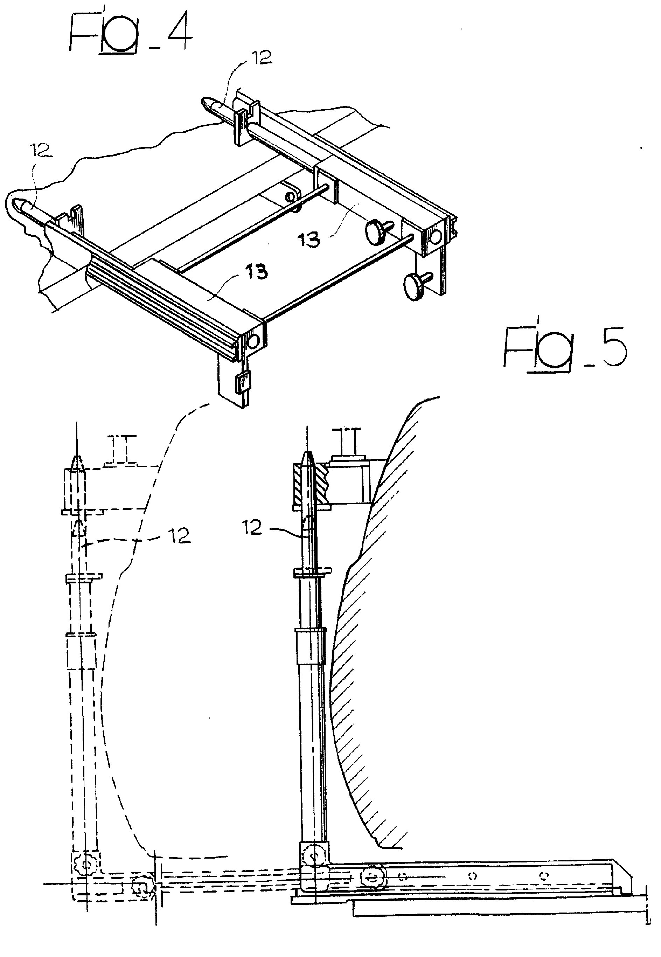

In the case of the side door 9, or the module of the cubing that simulates the real part, this has external couplings 11 inserted on vertical supporting pins 12 projecting from two box-type uprights 13 which are part of an auxiliary frame 10. The two uprights 13 (see figure 4) are joined to two horizontal section bars 14 parallel to and at a distance from each other, which are also part of the auxiliary frame 10 and which are in turn assembled slidingly inside guiding sections bars 15 fitted under the base structure 1 in a transverse direction in relation to the longitudinal direction of the body. The figure 4 shows the two uprights 13 with the pins 12 in a lowered condition not in use, while figure 3 shows the uprights 13 in the erect position of use. In this condition, the two section bars 14 can be made to slide in their respective guides 15, to move the door 9 between the position shown in figure 3 and with a dashed line in figure 5, in which the door is at a distance from the body and the position indicated with a continuous line in figure 5, in which the door 9 is received in the corresponding compartment of the body. In this way, the user can obtain easy access to both the external surface and to the internal surface of the door 9, to check the quality of the connections of the various finishes assembled on the outside and inside of the door, and the inside of the passenger compartment may also be easily accessed.

Naturally, without prejudice to the principle of the finding, the constructional details may vary widely in relation to those described and illustrated purely as an example, without however departing from the scope of the present finding.

## Claims

1. Mock-up of motor vehicle structure (cubing), rigorously duplicating the conformation and design dimensions of a motor vehicle structure, with all its surfaces of reference and for fixing one or more parts destined to be assembled on it, said cubing being utilizable to check the production quality of the aforesaid parts by assembling said parts on the cubing and checking the precision of the relative connections, **characterized in that** said cubing is a true duplicate of an entire body of a motor vehicle, both as regards its external surfaces and as regards the internal surfaces of the passenger compartment.

2. Mock-up according to Claim 1, **characterized in that** the cubing has a structure composed of a plurality of modules (2-5) connected to one another and fixed precisely by means of removable connection means, such as screws/pins.

3. Mock-up according to Claim 2, **characterized in that** the modules forming the cubing comprise at least one platform (4), two sides (3), one front module (5), one rear module (6) and one roof module.

4. Mock-up according to Claim 3, **characterized in that** the cubing includes a base framework supporting the platform (4), and an auxiliary frame (10) supporting an exact duplicate of the structure of side doors (9), assembled slidingly at the bottom from the base framework (1) in a transverse direction in relation to the longitudinal direction of the body, between a position in which the door (9) is at a distance from the body, and a position in which the door is connected in its corresponding compartment of the body.
The foregoing substantially as described and illustrated and for the purposes herein specified.
